# EUROPEAN PATENT APPLICATION

(11) **EP 4 600 706 A1**
(43) Date of publication of application: **13.08.2025**
(21) Application number: 23894186.8
(22) Date of filing: 31.07.2023
(51) Int. Cl.: G02B 5/02, F21S 2/00, G02F 1/13357, F21Y 115/10, F21Y 115/30

(54) **LIGHT-DIFFUSING SHEET, BACKLIGHT UNIT, LIQUID CRYSTAL DISPLAY DEVICE, AND INFORMATION APPARATUS**

(30) Priority: 22.11.2022 JP 2022186634
(71) Applicant: KEIWA Incorporated, Tokyo 103-0025 (JP)
(72) Inventor: HARADA, Kenichi, Tokyo 103-0025 (JP); TSAI, Chengheng, Tokyo 103-0025 (JP); UENO, Hiroaki, Tokyo 103-0025 (JP); FURUTA, Akira, Tokyo 103-0025 (JP)
(74) Representative: Behr, Wolfgang
(86) International application number: PCT/JP2023/027957
(87) International publication number: WO 2024/111170

(57) **Abstract**

A light-diffusing sheet 43 has a first surface 43a that serves as one of a light emission surface and a light incidence surface, and a second surface 43b that serves as the other of the light emission surface and the light incidence surface. A plurality of inverted substantially square pyramidal recesses 22 are provided in the first surface 43a. The arithmetic mean roughness of the second surface 43b is 1.5 µm or less. The transfer rate of the plurality of recesses 22 is 87% or more.

## Description

### Technical Field

The present disclosure relates to a light-diffusing sheet, a backlight unit, a liquid crystal display device, and an information apparatus.

### Background Art

Liquid crystal display devices are widely used as display devices in various information apparatuses including smartphones and tablet terminals. As backlights of liquid crystal display devices, direct-type systems in which a light source is arranged on a rear surface of a liquid crystal panel are predominantly used.

When adopting a direct-type backlight, a light-diffusing sheet is used to erase an image of the light source, such as an LED (Light Emitting Diode), and increase brightness uniformity on the display screen (see PTL 1).

In a thin display for a laptop computer, a tablet terminal, or the like, a sheet in which inverted pyramidal recesses are formed, for example, is used as the light-diffusing sheet.

### Citation List

### Patent Literature

PTL 1: Japanese Patent Application Publication No. 2011-129277

### Summary of Invention

### Technical Problem

In a direct-type backlight, the light source is arranged directly beneath the display screen, and therefore, as the display becomes thinner, the distance from the light source to the light-diffusing sheet and the thickness of the light-diffusing sheet are reduced, making it difficult to sufficiently diffuse light using the light-diffusing sheet. As a result, a problem occurs in that brightness uniformity in the display screen deteriorates.

An object of the present disclosure is to provide a light-diffusing sheet capable of improving brightness uniformity, as well as a backlight unit, a liquid crystal display device, and an information apparatus using the light-diffusing sheet.

### Solution to Problem

To achieve the object described above, a light-diffusing sheet according to the present disclosure has a first surface that serves as one of a light emission surface and a light incidence surface, and a second surface that serves as the other of the light emission surface and the light incidence surface. A plurality of inverted substantially square pyramidal recesses are provided in the first surface. The arithmetic mean roughness of the second surface is 1.5 µm or less. The transfer rate of the plurality of recesses is 87% or more.

With the light-diffusing sheet according to the present disclosure, a plurality of inverted substantially square pyramidal recesses with a transfer rate of 87% or more are provided on the first surface that serves as either the light emission surface or the light incidence surface, and therefore emitted or incident light can be diffused uniformly by the recesses. Further, by setting the arithmetic mean roughness of the second surface at 1.5 µm or less, impairment of the brightness uniformity effect realized by the recesses due to light diffusion on the second surface can be suppressed. Hence, with the light-diffusing sheet according to the present disclosure, the brightness uniformity can be improved.

In the present disclosure, the "transfer rate of the recesses" is a value expressing, as a percentage (%), "(depth of actually formed recesses)/(depth of recesses when formed in a geometrically true inverted square pyramidal shape)".

In the light-diffusing sheet according to the present disclosure, when the transfer rate is 90% or more, the brightness uniformity effect of the recesses can be further increased.

In the light-diffusing sheet according to the present disclosure, when the arithmetic mean roughness is 1.0 µm or less, impairment of the brightness uniformity effect of the recesses can be further suppressed.

A backlight unit according to the present disclosure is built into a liquid crystal display device in order to guide light emitted from a plurality of light sources to a display screen, the backlight unit including the light-diffusing sheet according to present disclosure, described above, which is provided between the display screen and the plurality of light sources.

Since the backlight unit according to the present disclosure includes the light-diffusing sheet according to the present disclosure, described above, the brightness uniformity can be improved even when the thickness of the liquid crystal display device is further reduced.

In the backlight unit according to the present disclosure, the light-diffusing sheet may be stacked in a plurality of layers and arranged between the display screen and the plurality of light sources. Thus, the brightness uniformity can be even further improved by the plurality of layers of the light-diffusing sheet. In this case, the plurality of light sources may be white light sources, and the arithmetic mean roughness may be 1.0 µm or less. Alternatively, the plurality of light sources may be blue light sources, a color conversion sheet for converting the wavelength of the light may be further provided, and the transfer rate may be 90% or more. The color conversion sheet may be disposed between the display screen and the plurality of stacked layers of the light-diffusing sheet, and in this case, in the light-diffusing sheet having a plurality of stacked layers, the first surface may be the light incidence surface.

A liquid crystal display device according to the present disclosure includes the backlight unit according to the present disclosure, described above, and a liquid crystal display panel.

Since the liquid crystal display device according to the present disclosure includes the backlight unit according to the present disclosure, described above, the brightness uniformity can be improved even when the thickness is further reduced.

An information apparatus according to the present disclosure includes the liquid crystal display device according to the present disclosure, described above.

Since the information apparatus according to the present disclosure includes the liquid crystal display device according to the present disclosure, described above, the brightness uniformity can be improved even when the thickness is further reduced.

### Advantageous Effects of Invention

According to the present disclosure, it is possible to provide a light-diffusing sheet capable of improving brightness uniformity, as well as a backlight unit, a liquid crystal display device, and an information apparatus using the light-diffusing sheet.

### Brief Description of Drawings

[Fig. 1]

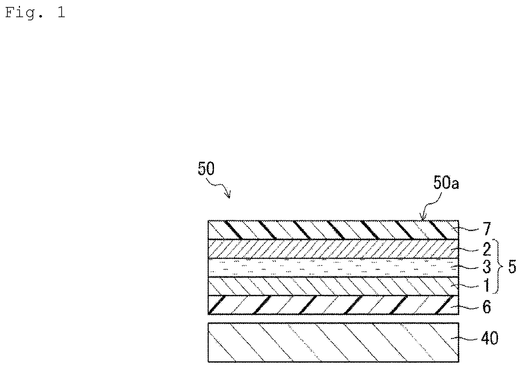

   Fig. 1 is a sectional view of a liquid crystal display device according to an embodiment.
[Fig. 2]

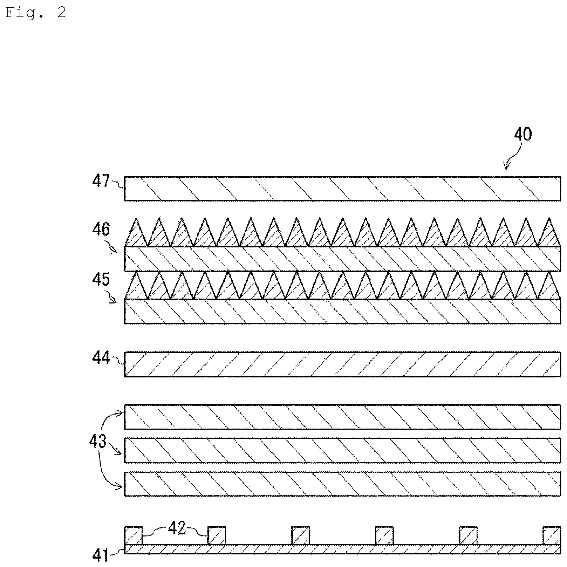

   Fig. 2 is a view showing a first example of a sectional structure of a backlight unit according to the embodiment.
[Fig. 3]

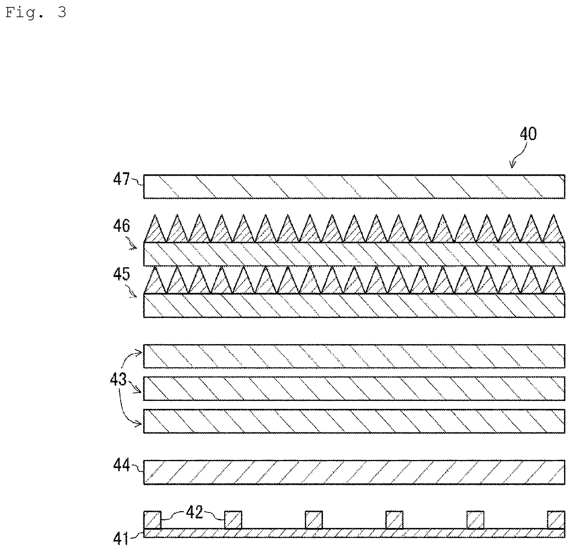

   Fig. 3 is a view showing a second example of the sectional structure of the backlight unit according to the embodiment.
[Fig. 4]

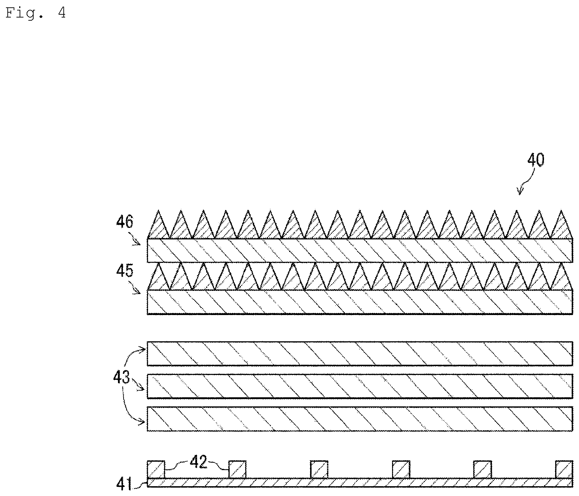

   Fig. 4 is a view showing a third example of the sectional structure of the backlight unit according to the embodiment.
[Fig. 5]

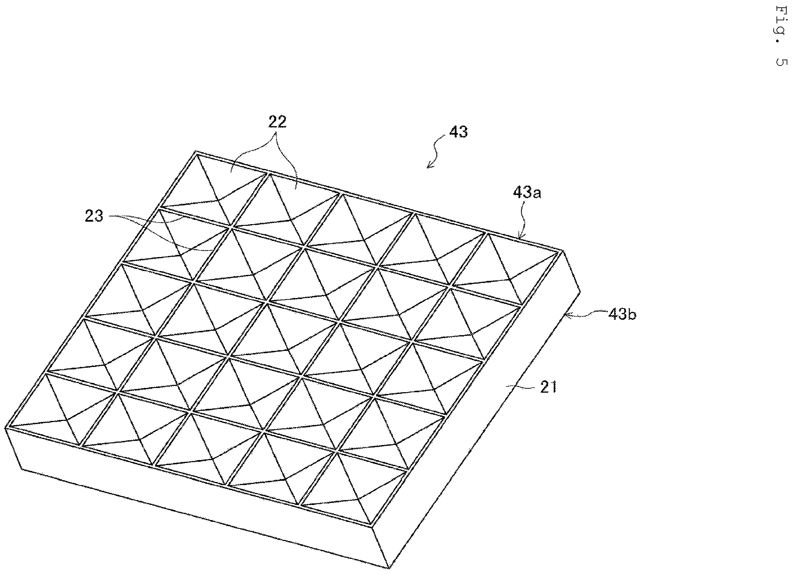

   Fig. 5 is a perspective view of a light-diffusing sheet according to the embodiment.
[Fig. 6]

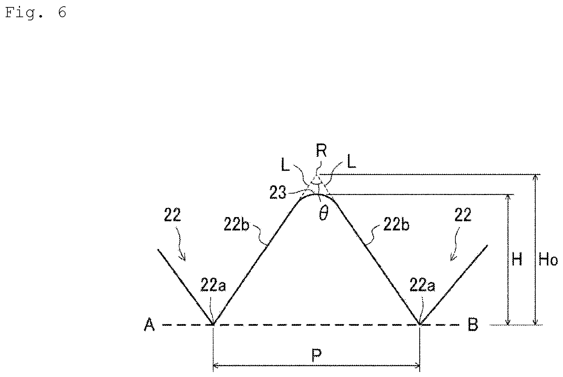

   Fig. 6 is a schematic view showing an example of a sectional structure in a case where the light-diffusing sheet according to the embodiment is cut along a plane that passes through respective centers of adjacent recesses and an intermediate point of a ridgeline positioned between the recesses, and that is perpendicular to a sheet surface.
[Fig. 7]

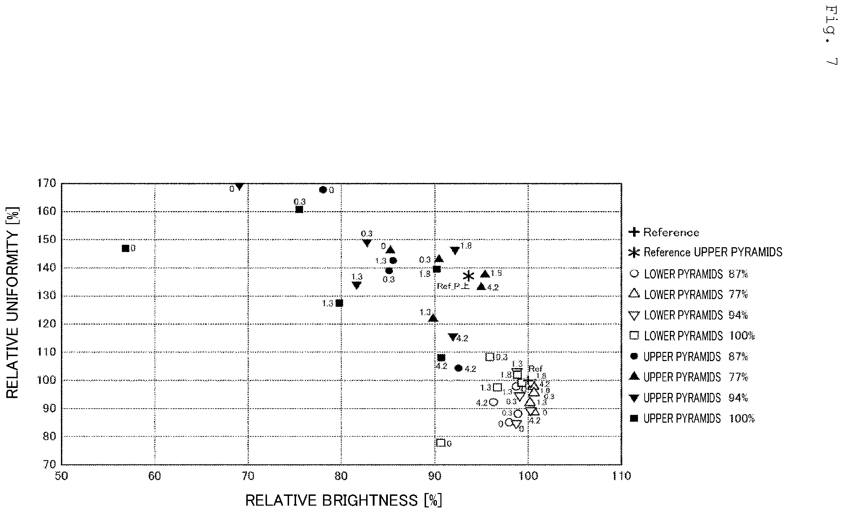

   Fig. 7 is a view showing evaluation results obtained in relation to brightness and brightness uniformity in a first test (with a configuration in which a color conversion sheet is not disposed).
[Fig. 8]

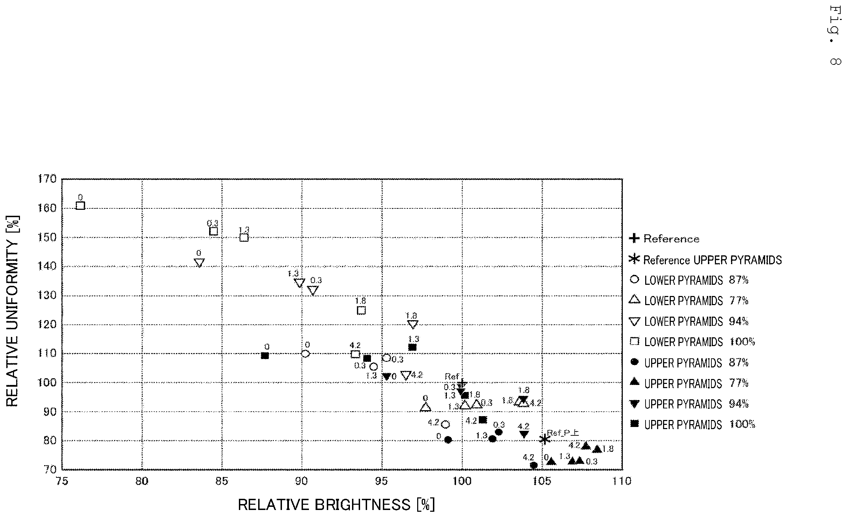

   Fig. 8 is a view showing evaluation results obtained in relation to the brightness and brightness uniformity in a second test (with a configuration in which the color conversion sheet is disposed on the upper side of the light-diffusing sheet).
[Fig. 9]

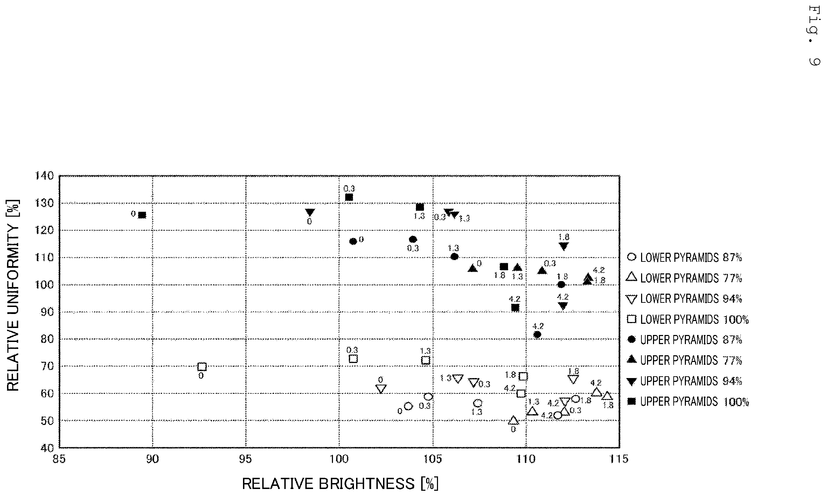

   Fig. 9 is a view showing evaluation results obtained in relation to the brightness and brightness uniformity in the second test (with a configuration in which the color conversion sheet is disposed on the lower side of the light-diffusing sheet).
[Fig. 10]

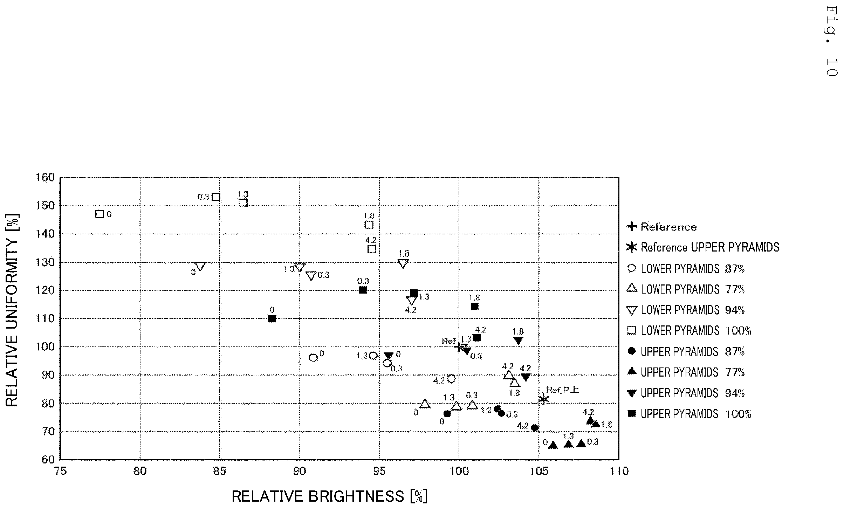

   Fig. 10 is a view showing evaluation results obtained in relation to the brightness and brightness uniformity in a third test (with a configuration in which the color conversion sheet is disposed on the upper side of the light-diffusing sheet).
[Fig. 11]

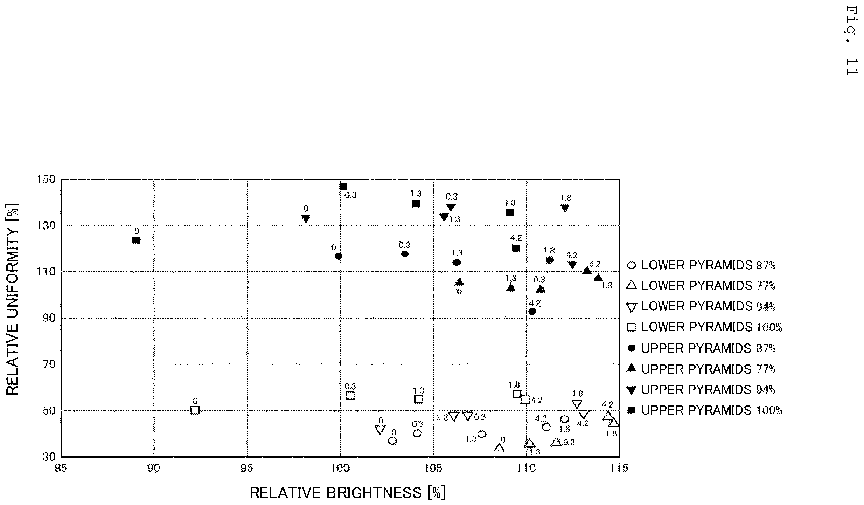

   Fig. 11 is a view showing evaluation results obtained in relation to the brightness and brightness uniformity in the third test (with a configuration in which the color conversion sheet is disposed on the lower side of the light-diffusing sheet).

### Description of Embodiments

### (Embodiment)

A light-diffusing sheet, a backlight unit, a liquid crystal display device, and an information apparatus according to an embodiment will be described below with reference to the figures. It should be noted that the scope of the present disclosure is not limited to the embodiment described below, and any modifications can be made without departing from the scope of the technical ideas of the present disclosure.

### <Liquid Crystal Display Device>

**Fig.** 1 is an example sectional view of a liquid crystal display device according to the embodiment.

As shown in **Fig. 1****,** a liquid crystal display device 50 includes a liquid crystal display panel **5,** a first polarizing plate 6 adhered to a bottom surface of the liquid crystal display panel **5,** a second polarizing plate 7 adhered to a top surface of the liquid crystal display panel **5,** and a backlight unit 40 provided on a back surface side of the liquid crystal display panel 5 via the first polarizing plate **6.** The liquid crystal display panel 5 includes a TFT substrate 1 and a CF substrate 2 provided so as to face each other, a liquid crystal layer 3 provided between the TFT substrate 1 and the CF substrate 2, and a sealing material (not illustrated) provided in a frame shape between the TFT substrate 1 and the CF substrate 2 in order to seal the liquid crystal layer 3.

While the shape of a display screen 50a of the liquid crystal display device 50 as viewed from the front (above in Fig. 1) is generally a rectangle or a square, the shape is not limited thereto and may be any shape, such as a rectangle with rounded corners, an ellipse, a circle, a trapezoid, or the shape of an instrument panel for an automobile.

In the liquid crystal display device 50, in each subpixel corresponding to each pixel electrode, a voltage of a predetermined magnitude is applied to the liquid crystal layer 3 so as to change a state of alignment of the liquid crystal layer 3. Accordingly, the transmittance of light entering from the backlight unit 40 through the first polarizing plate 6 is adjusted. The light having the adjusted transmittance is emitted through the second polarizing plate 7, whereby an image is displayed.

The liquid crystal display device 50 of this embodiment is used as a display device built into various information apparatuses (for example, a vehicle-mounted device for car navigation or the like, a personal computer, a mobile phone, a portable information terminal, a portable game machine, a copy machine, a ticket vending machine, or an automated teller machine).

For example, the TFT substrate 1 includes a plurality of TFTs provided in a matrix pattern on a glass substrate, an interlayer insulating film provided so as to cover each TFT, a plurality of pixel electrodes provided in a matrix pattern on the interlayer insulating film and respectively connected to the plurality of TFTs, and an alignment film provided so as to cover each pixel electrode. For example, the CF substrate 2 includes a black matrix provided in a grid pattern on a glass substrate, a color filter including a red layer, a green layer, and a blue layer respectively provided between the respective grids of the black matrix, a common electrode provided so as to cover the black matrix and the color filter, and an alignment film provided so as to cover the common electrode. The liquid crystal layer 3 is constituted by a nematic liquid crystal material or the like containing liquid crystal molecules with electro-optic characteristics. For example, the first polarizing plate 6 and the second polarizing plate 7 include a polarizer layer with a polarizing axis in one direction and a pair of protection layers provided so as to sandwich the polarizer layer.

### <Backlight Unit>

Fig. 2 shows a first example of a sectional structure of the backlight unit 40 according to the embodiment.

As shown in Fig. 2, the backlight unit 40 includes a reflecting sheet 41, a plurality of light sources 42 arranged in a two-dimensional pattern on the reflecting sheet 41, a light-diffusing sheet 43 provided on an upper side of the plurality of light sources 42, a color conversion sheet 44 provided on an upper side of the light-diffusing sheet 43, a first prism sheet 45 and a second prism sheet 46 provided in that order on an upper side of the color conversion sheet 44, and an upper light-diffusing sheet 47 provided on an upper side of the second prism sheet 46.

In the example shown in Fig. 2, the light-diffusing sheet 43 is provided on the backlight unit 40 in a three-layer stack, but the light-diffusing sheet 43 may be used as a single layer, or may be used in a stack of two, four, or more layers.

For example, the reflecting sheet 41 is constituted by a film made of white polyethylene terephthalate resin, a silver-deposited film, or the like.

The type of the light sources 42 is not particularly limited, and for example, the light sources 42 may be LED elements, laser elements, or the like, while from the viewpoints of cost, productivity, and so on, LED elements may be used. In the example shown in Fig. 2, blue LED elements are used as the light sources 42. For example, a blue LED element emits light of x < 0.24, y < 0.18 as CIE 1931 chromaticity coordinates. The light sources 42 may have a rectangular shape in a plan view, and in this case, the length of one side may be 10 µm or more (preferably, 50 µm or more) and 10 mm or less (preferably, 5 mm or less). When LED elements are used as the light sources 42, the plurality of LED elements may be arranged at fixed intervals on the reflecting sheet 41. In order to adjust the output angle characteristic of the LED element serving as the light source 42, a lens may be mounted on the LED element. Although the number of arranged light sources 42 is also not particularly limited, in a case where the plurality of light sources 42 are arranged in a distributed manner, the light sources 42 are preferably arranged regularly on the reflecting sheet 41. Regularly arranged means arranged with fixed regularity, and arranging the light sources 42 at equal intervals, for example, constitutes arranging regularly. When the light sources 42 are arranged at equal intervals, a center-to-center distance between two adjacent light sources 42 may be 0.5 mm or more (preferably, 2 mm or more) and 20 mm or less.

The light-diffusing sheet 43 diffuses and emits light entering from the light sources 42. As long as the matrix resin constituting the light-diffusing sheet 43 is formed from a material that transmits light, there are no particular limitations thereon, and for example, the matrix resin may be polycarbonate, acrylic, polystyrene, MS (methyl methacrylate-styrene copolymer) resin, polyethylene terephthalate, polyethylene naphthalate, cellulose acetate, polyimide, and so on. The thickness of the light-diffusing sheet 43 is also not particularly limited, but may be 50 µm or more and 3 mm or less, for example. When the thickness of the light-diffusing sheet 43 exceeds 3 mm, it becomes more difficult to achieve a reduction in the thickness of the liquid crystal display, whereas when the thickness of the light-diffusing sheet 43 falls below 50 µm, it becomes difficult to obtain a sufficient light diffusion effect. When the light-diffusing sheet 43 is stacked in a plurality of layers, as shown in Fig. 2, the total thickness of the stacked sheets may be approximately several hundred µm to several mm. The light-diffusing sheet 43 may be in the form of a film or a plate. The configuration and manufacturing method of the light-diffusing sheet 43 will be described in detail later.

The color conversion sheet 44 is a wavelength conversion sheet for converting the light (in the example shown in Fig. 2, blue light) from the light sources 42 into light having a wavelength of a desired color (for example, green or red) as a peak wavelength. For example, the color conversion sheet 44 converts blue light with a wavelength of 450 nm into green light with a wavelength of 540 nm and red light with a wavelength of 650 nm. In this case, when light sources 42 that emit blue light with a wavelength of 450 nm are used, the blue light is partially converted into green light and red light by the color conversion sheet 44, and therefore the light that passes through the color conversion sheet 44 becomes white light. A QD (quantum dot) sheet, a fluorescent sheet, or the like, for example, may be used as the color conversion sheet 44.

The first prism sheet 45 and second prism sheet 46 are brightness enhancement sheets that refract light rays entering from the color conversion sheet 44 to a normal direction side. For example, a plurality of grooves with an isosceles triangular cross-section are provided adjacent to each other on a light emission surface side of each of the prism sheets 45, 46, and prisms are formed by triangular prism parts sandwiched between pairs of adjacent grooves. The apex angle of the prism is around 90 degrees, for example. The grooves formed in the first prism sheet 45 and the grooves formed in the second prism sheet 46 may be arranged alternately. Thus, light rays entering from the color conversion sheet 44 can be refracted to the normal direction side by the first prism sheet 45, and light rays emitted from the first prism sheet 45 can be further refracted by the second prism sheet 45 so as to advance substantially perpendicular to the light incidence surface of the upper light-diffusing sheet 47. The prism sheets 45, 46 may be stacked as separate bodies or formed integrally. The total thickness of the prism sheets 45, 46 may be around 100 to 400 µm, for example. For example, PET (polyethylene terephthalate) films given a prism shape using a UV-curable acrylic resin may be used as the prism sheets 45, 46.

It should be noted that a single-layer prism sheet may be used as a brightness enhancement sheet instead of the prism sheets 45, 46. Alternatively, another type of optical sheet that can increase the brightness of the light emitted from the light sources 42 may be used.

The upper light-diffusing sheet 47 suppresses brightness unevenness due to the shape of the prism portions of the prism sheets 45, 46 and so on by slightly diffusing light rays entering from the second prism sheet 46 side. The upper light-diffusing sheet 47 may be stacked directly on the front surface of the second prism sheet 46. The thickness of the light-diffusing sheet 47 is not particularly limited, and may be 50 µm or more and 3 mm or less, for example. When the thickness of the upper light-diffusing sheet 47 exceeds 3 mm, it becomes more difficult to achieve a reduction in the thickness of the liquid crystal display, whereas when the thickness of the upper light-diffusing sheet 47 falls below 50 µm, it becomes difficult to obtain a sufficient light diffusion effect. The upper light-diffusing sheet 47 may be in the form of a film or a plate. The upper light-diffusing sheet 47 may be configured to include a base material layer and a light-diffusing layer that is stacked on the light emission surface of the base material layer and contains a resin matrix and resin beads. Alternatively, for example, a PET film with at least one surface given an uneven shape using a UV-curable acrylic resin may be used as the upper light-diffusing prism sheet 47.

### <Modification of Backlight Unit>

In the example configuration of the backlight unit 40 shown in Fig. 2, the color conversion sheet 44 is provided on the upper side of the light-diffusing sheet 43, or more specifically between the uppermost layer of the light-diffusing sheet 43 and the first prism sheet 45. Instead, as shown in Fig. 3, the color conversion sheet 44 may be provided on a lower side of the light-diffusing sheet 43, or more specifically between the lowermost layer of the light-diffusing sheet 43 and the plurality of light sources 42.

Furthermore, in the example configuration of the backlight unit 40 shown in Fig. 2 or 3, blue light sources are used as the light sources 42, and the color conversion sheet 44 is used. Instead, as shown in Fig. 4, a configuration in which white light sources are used as the light sources 42 and a color conversion sheet is not disposed may be employed. In this case, as in the example shown in Fig. 4, the upper light-diffusing sheet 47 may also be omitted. The white light source may be constituted by an LED element having a peak wavelength in the blue region, an LED element having a peak wavelength in the green region, and an LED element having a peak wavelength in the red region, and for example, may emit light of 0.24 < x < 0.42, 0.18 < y < 0.48 as CIE 1931 chromaticity coordinates.

### <Light-diffusing Sheet>

Fig. 5 is an example perspective view of the light-diffusing sheet 43 according to the embodiment.

As shown in Fig. 5, the light-diffusing sheet 43 includes a first surface 43a that serves as one of a light emission surface and a light incidence surface, and a second surface 43b that serves as the other of the light emission surface and the light incidence surface. A plurality of inverted substantially square pyramidal (inverted pyramidal) recesses 22 are provided in the first surface 43a. The second surface 43b is a flat surface or a matte surface. When a plurality of sheets are used as the light-diffusing sheet 43, a sheet on which the first surface 43a serves as the light emission surface and a sheet on which the first surface 43a serves as the light incidence surface may coexist, and a plurality of types of sheets on which the dimensions, shapes, and array pitches of the recesses 22 and the surface shapes of the second surface 43b differ from each other may be used.

The plurality of recesses 22 may be arranged in a two-dimensional matrix pattern on the first surface 43a. In other words, the plurality of recesses 22 may be arranged along two mutually orthogonal directions. Adjacent recesses 22 are partitioned by ridgelines 23. The ridgelines 23 extend along the two directions in which the recesses 22 are arranged. The array pitch of the recesses 22 may be around 50 µm or more and around 500 µm or less, for example. The deepest portion of the recess 22 is in the center (the vertex of the inverted pyramid) of the recess 22. An angle formed by a wall surface (the inclined surface of the inverted substantially square pyramid) of the recess 22 and a sheet surface (an imaginary mirror surface when the recess 22 is absent) of the light-diffusing sheet 43 may be 40 degrees or more and 65 degrees or less, for example, and is preferably 45 degrees or more and 60 degrees or less. In other words, the apex angle of the recess 22 may be, for example, 50 degrees or more and 100 degrees or less, and preferably 60 degrees or more and 90 degrees or less.

In the example shown in Fig. 5, the recesses 22 are shown to be arranged in a 5-by-5 matrix pattern for the sake of simplicity, but the actual number of arranged recesses 22 is significantly larger. In the two-dimensional array of the plurality of recesses 22, the recesses 22 may be provided in the first surface 21a without gaps, or may be provided at predetermined intervals. In addition, a part of the recesses 22 may be randomly arrayed to the extent that the light-diffusing effect is not impaired.

Although the expression "inverted substantially square pyramid" is used in consideration of the fact that it is difficult to form recesses in a geometrically strict inverted square pyramidal shape using ordinary shape transfer techniques, this expression of course includes a shape that can be regarded as a true or substantially inverted square pyramid. In other words, "substantially" means "can be approximated", and for example, a "substantially square pyramid" refers to a shape that can be approximated to a square pyramid. Furthermore, shapes deformed from an "inverted square pyramid" within a range of inevitable shape variability due to machining accuracy during industrial production are also included in a "substantially inverted square pyramid".

The light-diffusing sheet 43 is formed by machining the base material layer 21. The base material layer 21 must transmit light rays, and is therefore formed using a transparent (e.g., colorless and transparent) synthetic resin as a main component. The main component of the base material layer 21 is not particularly limited, and for example, polycarbonate, polyethylene terephthalate, polyethylene naphthalate, acrylic resin, polystyrene, polyolefin, cellulose acetate, weather-resistant polyvinyl chloride, or the like may be used. It should be noted that the term "main component" refers to the component with the largest content, for example a component with a content of 50% by mass or more. The base material layer 21 may contain a diffusing agent and other additives, or may be substantially free of additives. The additives that may be included are not particularly limited, but may be inorganic particles of silica, titanium oxide, aluminum hydroxide, barium sulfate, and so on, for example, or organic particles of acrylic, acrylonitrile, silicone, polystyrene, polyamide, and so on, for example. The light-diffusing sheet 43 may have a single-layer structure constituted by the base material layer 21, or may have a structure of two or more layers including a layer on which the recesses 22 are formed.

The method of manufacturing the light-diffusing sheet 43 is not particularly limited, but for example, an extrusion molding method, an injection molding method, or the like may be used.

Procedures for manufacturing a single-layer light-diffusing sheet with an uneven shape on a surface thereof using an extrusion molding method are as follows. First, pellet-shaped plastic particles (to which a diffusing agent may be added) are fed into a single-screw extruder and melted and kneaded while applying heat. Subsequently, after sandwiching molten resin extruded by T-dies between two metal rolls and cooling the molten resin, a light-diffusing sheet is fabricated by conveying the resin using a guide roll and cutting the resin into flat sheets with a sheet cutter. In this case, since sandwiching the molten resin using metal rolls with surfaces having an inverted shape of the desired uneven shape causes the inverted shape on the roll surfaces to be transferred to the resin, the desired uneven shape can be formed on the surface of the light-diffusing sheet. In addition, since the shape transferred to the resin does not necessarily represent a 100% transfer of the shape of the roll surfaces, the shape of the roll surfaces may be designed backward from a degree of transfer.

When manufacturing a light-diffusing sheet with a two-layer structure having an uneven shape on a surface thereof using an extrusion molding method, for example, after feeding pellet-shaped plastic particles necessary for forming each layer into each of two single-screw extruders, procedures similar to those used for a single-layer light-diffusing sheet, described above, may be executed on each layer, whereupon the respective fabricated sheets may be stacked. Alternatively, a light-diffusing sheet with a two-layer structure having an uneven shape on a surface thereof may be fabricated as described below. First, pellet-shaped plastic particles necessary for forming each layer are fed into each of two single-screw extruders and melted and kneaded while applying heat. Next, the molten resin that is to form each layer is fed into one T-die, whereupon stacked molten resin that has been stacked in the T-die and extruded from the T-die is sandwiched between two metal rolls and cooled. Subsequently, a diffusing sheet with a two-layer structure having an uneven shape on a surface thereof may be fabricated by conveying the stacked molten resin using a guide roll and cutting the resin into flat sheets with a sheet cutter.

In addition, the light-diffusing sheet 43 may be manufactured as described below by shape transfer using UV (ultraviolet light). First, a roll having an inverted shape of the uneven shape to be transferred is filled with uncured ultraviolet-curing resin, whereupon a base material is pressed against the resin. Next, ultraviolet light is emitted in order to cure the ultraviolet-curing resin in a state where the roll filled with the resin and the base material are integrated. Next, a sheet to which the uneven shape has been shape-transferred by the resin is separated from the roll. Finally, the sheet is once again irradiated with ultraviolet light to completely cure the resin, whereby a light-diffusing sheet with an uneven shape on a surface thereof is fabricated.

### <Transfer Rate of Recesses in Light-diffusing Sheet and Arithmetic Mean Roughness of Second Surface>

In the light-diffusing sheet 43 according to the embodiment, the transfer rate of the plurality of inverted substantially square pyramidal (inverted pyramidal) recesses 22 provided in the first surface 43a that serves as one of the light emission surface and the light incidence surface is set at 87% or more, and the arithmetic mean roughness of the second surface 43b that serves as the other of the light emission surface and the light incidence surface is set at 1.5 µm or less.

Fig. 6 shows an example of a sectional structure in a case where the light-diffusing sheet 43 according to the embodiment is cut along a plane that passes through respective centers (vertices) 22a of recesses 22 adjacent to each other in the array direction (an A-B line) of the recesses 22 and an intermediate point of the ridgeline 23 positioned between the recesses 22, and that is perpendicular to the sheet surface.

In the present disclosure, the "transfer rate of the recesses 22" is a value expressing, as a percentage (%), "(depth H of actually formed recesses 22)/(depth (target depth) H₀ of recesses 22 when formed in a geometrically true inverted square pyramidal shape). An average value of the transfer rate of a statistically determined predetermined number of recesses, for example, may be used as the "transfer rate of the recesses 22".

The depth H of the recesses 22 is measured by a laser microscope or the like. The dimensions of a mold for manufacturing the recesses 22 may be used as the target depth H₀ of the recesses 22. When the recesses 22 are formed by extrusion molding, for example, the height of a pyramidal shape (an inverted shape of the recess 22) formed in an extrusion roll used for molding may be used. When the dimensions of the mold for manufacturing the recesses 22 are unknown, the target depth H₀ may be obtained by identifying, using actual measurement data obtained by a laser microscope or the like, the position of an intersection R between virtual lines L obtained by extending straight-line parts of wall surfaces (inclined surfaces) 22b of adjacent recesses 22 on either side of the ridgeline 23, calculating a height difference between the intersection R and the ridgeline 23, and adding the depth H of the recess 22 to the difference. Alternatively, an angle θ formed by straight line parts of the respective inclined surfaces 22b of recesses 22 that are adjacent to each other on either side of the ridgeline 23 and the array pitch P of the recesses 22 may be measured using a laser microscope or the like, and the target depth H₀ of the recesses 22 may be determined on the basis of the calculation formula H₀ = (P/2)/tan (θ/2).

It should be noted that when the apex angles of the recesses 22 are the same, the filling rate of the resin into the mold improves, making it easier to increase the transfer rate of the recesses 22, as the array pitch of the recesses 22 increases. Moreover, when the heights of the pyramid shapes (the inverted shapes of the recesses 22) formed in the mold are the same, the filling rate of the resin into the mold improves, making it easier to increase the transfer rate of the recesses 22, as the apex angle of the recess 22 increases.

From the viewpoint of the mechanical strength of the light-diffusing sheet 43 (the damage resistance of the recess-forming surface), the transfer rate of the recesses 22 may be set at 99% or less, or more preferably 98% or less. Furthermore, as the transfer rate of the recesses 22 increases, or in other words as the filling rate of the resin into the mold increases, mass production of the light-diffusing sheet 43 becomes more difficult. Conventionally, therefore, a light-diffusing sheet in which the transfer rate of the recesses is around 80% or less is used.

The inventors of the present application found that as the transfer rate of the recesses 22 increases, a brightness uniformity effect realized by the light-diffusing sheet 43 increases significantly. The inventors of the present application also found that in order to prevent the brightness uniformity effect of the recesses 22 from being impaired due to light diffusion on the second surface 43b, the arithmetic mean roughness Ra of the second surface 43b is preferably set at 1.5 µm or less. It should be noted, however, that when the arithmetic mean roughness Ra of the second surface 43b is set at 0, or in other words when the second surface 43b is a mirror surface, defects tend to occur on the mirror surface, leading to reductions in both the manufacturing yield and the brightness of the light-diffusing sheet 43. Moreover, when the various optical sheets are stacked during manufacture of the backlight unit, a mirror surface sheet is more likely to stick to another optical sheet, which can easily become a cause of reduced manufacturing efficiency. Accordingly, the arithmetic mean roughness Ra of the second surface 43b may be set at 0.01 µm or more.

### <Characteristics of Embodiment>

With the light-diffusing sheet 43 of the embodiment described above, the plurality of inverted substantially square pyramidal recesses 22 with a transfer rate of 87% or more are provided on the first surface 43a serving as the light emission surface or the light incidence surface, and as a result, emitted or incident light can be diffused uniformly by the recesses 22. Moreover, the arithmetic mean roughness of the second surface 43b is 1.5 µm or less, and therefore impairment of the brightness uniformity effect of the recesses 22 due to light diffusion by the second surface 43b can be avoided. Thus, even when the display is made thinner, an improvement in brightness uniformity can be achieved with the light-diffusing sheet 43 of this embodiment.

More specifically, with a configuration of an example to be described below, in which the light-diffusing sheet was constituted by three stacked sheets, the transfer rate of the recesses was set at 95%, and the arithmetic mean roughness Ra of the second surface was set at 0.3 µm, an improvement of 8 to 61% was obtained in the brightness uniformity in comparison with a configuration of a comparative example to be described below, in which the light-diffusing sheet was constituted by three stacked sheets, the transfer rate of the recesses was set at 87%, and the arithmetic mean roughness Ra of the second surface was set at 1.8 um.

In the light-diffusing sheet 43 of the embodiment, when the transfer rate of the recesses 22 is 90% or more, preferably 92% or more, and more preferably 94% or more, a further increase can be obtained in the brightness uniformity effect of the recesses 22.

In the light-diffusing sheet 43 of the embodiment, when the arithmetic mean roughness Ra of the second surface 43b is 1.0 µm or less, preferably 0.5 µm or less, and more preferably 0.3 µm or less, impairment of the brightness uniformity effect of the recesses 22 can be further suppressed.

The backlight unit 40 of the embodiment is built into the liquid crystal display device 50 so as to guide the light emitted from the plurality of light sources 42 toward the display screen 50a. In the backlight unit 40, the light-diffusing sheet 43 of the embodiment is provided between the display screen 50a and the light sources 42. Thus, even when the thickness of the liquid crystal display device 50 is further reduced, the brightness uniformity can be improved.

In the backlight unit 40 of the embodiment, the plurality of light sources 42 may be arranged on the reflecting sheet 41 provided on the opposite side to the display screen 50a as viewed from the light-diffusing sheet 43. Thus, the light is further diffused by multiple reflection between the light-diffusing sheet 43 and the reflecting sheet 41, leading to a further improvement in the brightness uniformity.

In the backlight unit 40 of the embodiment, the light-diffusing sheet 43 may be stacked in a plurality of layers and arranged between the display screen 50a and the light sources 42. Thus, the brightness uniformity can be further improved by the plurality of layers of the light-diffusing sheet 43. In this case, the plurality of light sources 42 may be white light sources, and the arithmetic mean roughness Ra of the second surface 43b may be 1.0 µm or less. Alternatively, the plurality of light sources 42 may be blue light sources, and the transfer rate of the recesses 22 may be 90% or more. When the plurality of light sources 42 are blue light sources, the color conversion sheet 43 may be disposed between the display screen 50a and the plurality of stacked layers of the light-diffusing sheet 43, and in this case, the first surface 43a of the plurality of stacked layers of the light-diffusing sheet 43 may be the light incidence surface.

In the backlight unit 40 of the embodiment, the distance between the plurality of light sources 42 and the light-diffusing sheet 43 may be 0 mm or more and 1 mm or less. Thus, even when it is impossible to secure a sufficient distance between the light sources and the sheet due to reduced thickness, deterioration of the brightness uniformity can be suppressed by the diffusion performance of the light-diffusing sheet 43.

The liquid crystal display device 50 of the embodiment includes the backlight unit 40 of the embodiment and the liquid crystal display panel 5. Thus, the brightness uniformity can be improved even when the thickness or the number of stacked layers of the light-diffusing sheet 43 is reduced or the like in response to a thickness reduction. A similar effect can be obtained in an information apparatus (a personal computer, a mobile phone, or the like) into which the liquid crystal display device 50 of the embodiment is built.

It should be noted that in this embodiment, a direct-type backlight unit in which the plurality of light sources 42 are arranged in a distributed manner on the back surface side of the display screen 50a of the liquid crystal display device 50 is used as the backlight unit 40. Hence, in order to reduce the size of the liquid crystal display device 50, the distance between the light sources 42 and the light-diffusing sheet 43 must be reduced. However, when this distance is reduced, a phenomenon (brightness unevenness) whereby the brightness of the display screen 50a in parts located in regions between the distributed light sources 42 decreases below that of other parts is more likely to occur.

Using the light-diffusing sheet 43 of this embodiment, however, is effective in suppressing brightness unevenness. More specifically, in view of future reductions in the thickness of small and medium-sized liquid crystal displays, it is thought that the effectiveness of the light-diffusing sheet 43 of this embodiment will become even more pronounced by setting the distance between the light sources 42 and the light-diffusing sheet 43 at 15 mm or less, preferably 10 mm or less, more preferably 5 mm or less, even more preferably 2 mm or less, and ultimately 0 mm.

### (Examples and Comparative Examples)

Examples and comparative examples will be described below.

In the examples and comparative examples, a light-diffusing sheet 43 having a base material layer 21 with a thickness of 110 µm, formed using clear polycarbonate as a base material, was used. In both the examples and the comparative examples, a diffusing agent was not added to the base material layer 21, and a plurality of inverted substantially square pyramidal (inverted pyramidal) recesses 22 with a target depth of 50 µm and an apex angle of 90° were arranged two-dimensionally on the first surface 43a at an array pitch of 100 µm.

The method for manufacturing the light-diffusing sheet 43 of the examples and comparative examples was as follows. First, pellet-shaped base material resin (plastic resin) was formed into a resin film using an extruder. Next, using a roll having convex pyramid shapes on the surface thereof as one of two metal rolls and using an embossed roll with a random matte shape or a mirror surface roll as the other roll, the two rolls were pressed (heat pressed) against the resin film to produce the single-layer light-diffusing sheet 43 having the inverted pyramidal recesses 22 on the first surface 43a and a matte surface or a mirror surface on the second surface 43b. The transfer rate of the recesses 22 was controlled by the pressing conditions of the rolls and so on, and the arithmetic mean roughness Ra of the second surface 43b (in the case of a matte surface) was controlled by the roughness of the embossed roll surface.

More specifically, as the light-diffusing sheet 43 of the examples, samples in which the transfer rate of the recesses 22 was 87% and the arithmetic mean roughness Ra of the second surface 43b was respectively 0 µm, 0.3 µm, and 1.3 µm, samples in which the transfer rate of the recesses 22 was 94% and the arithmetic mean roughness Ra of the second surface 43b was respectively 0 µm, 0.3 µm, and 1.3 µm, and samples in which the transfer rate of the recesses 22 was 100% and the arithmetic mean roughness Ra of the second surface 43b was respectively 0 µm, 0.3 µm, and 1.3 µm were prepared.

Further, as the light-diffusing sheet 43 of the comparative examples, samples in which the transfer rate of the recesses 22 was 87% and the arithmetic mean roughness Ra of the second surface 43b was respectively 1.8 µm and 4.2 µm, samples in which the transfer rate of the recesses 22 was 77% and the arithmetic mean roughness Ra of the second surface 43b was respectively 0 µm, 0.3 µm, 1.3 µm, 1.8 µm, and 4.2 µm, samples in which the transfer rate of the recesses 22 was 94% and the arithmetic mean roughness Ra of the second surface 43b was respectively 1.8 µm and 4.2 µm, and samples in which the transfer rate of the recesses 22 was 100% and the arithmetic mean roughness Ra of the second surface 43b was respectively 1.8 µm and 4.2 µm were prepared.

The arithmetic mean roughness Ra of the second surface 43b of the light-diffusing sheets 43 of the examples and comparative examples was measured using SJ-210, manufactured by Mitutoyo Corp., in accordance with JIS B 0601-1994, with the measurement speed set at 0.5 mm/s, the measurement distance set at 4 mm, and a cutoff value λc set at 0.8 mm.

In first to fourth tests to be described below, the brightness and brightness uniformity of the light-diffusing sheets 43 of the examples and comparative examples were evaluated as follows. First, a light-diffusing sheet 43 of the same structure was stacked in three layers in the same orientation and arranged on the upper side of the plurality of two-dimensionally arranged light sources 42, the prism sheets 45, 46 were arranged on the upper side thereof, a transparent glass plate was placed on the upper side thereof to prevent the sheets from lifting, and using the 2D spectroradiometer SR-5000HS, manufactured by Topcon Technohouse Corp., the brightness in a vertical upward direction (a direction from the light sources 42 toward the glass plate) was measured. Next, a two-dimensional brightness distribution in a 40 mm square range was acquired using a brightness unevenness measuring device, and after correcting the overall brightness balance, an average value and a standard deviation of the brightness were calculated. The calculated average brightness value was set as the brightness of the light-diffusing sheet 43, and "(average brightness value)/(standard deviation of brightness)" was defined as the brightness uniformity of the light-diffusing sheet 43, whereupon these properties were evaluated.

### <First Test>

In the first test, the brightness and brightness uniformity of the light-diffusing sheet 43 were evaluated using the configuration of the backlight unit 40 shown in Fig. 4, in which white light sources are used as the light sources 42 and the color conversion sheet 44 and the upper light-diffusing sheet 47 are not disposed.

As a result, with respect to the examples and comparative examples in which the transfer rate of the recesses 22 was 87%, when the brightness of the sample in which the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, and 4.2 µm was 98%, 96%, 99%, and 99%, respectively, and when the first surface 43a was set as the light emission surface, the brightness of the samples in which Ra was 0 µm, 0.3 µm, 1.3 µm, and 4.2 µm was 83%, 91%, 91%, and 99%, respectively.

Further, with respect to the examples and comparative examples in which the transfer rate of the recesses 22 was 87%, when the brightness uniformity of the sample in which the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, and 4.2 µm was 85%, 92%, 98%, and 82%, respectively, and when the first surface 43a was set as the light emission surface, the brightness uniformity of the samples in which Ra was 0 µm, 0.3 µm, 1.3 µm, and 4.2 µm was 122%, 101%, 99%, and 76%, respectively.

In other words, in the examples in which the transfer rate of the recesses 22 was 87%, the brightness uniformity greatly improved when the first surface 43a was set as the light emission surface and the arithmetic mean roughness Ra of the second surface 43b was set at 0 µm.

Further, with respect to the comparative examples in which the transfer rate of the recesses 22 was 77%, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 101%, 101%, 100%, 101%, and 101%, respectively, and when the first surface 43a was set as the light emission surface, the brightness of the samples in which Ra was 0 µm, 0.3 µm, 1.3 µm, 1.8 µm, and 4.2 µm was 91%, 97%, 96%, 102%, and 102%, respectively.

Furthermore, with respect to the comparative examples in which the transfer rate of the recesses 22 was 77%, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 89%, 95%, 92%, 98%, and 98%, respectively, and when the first surface 43a was set as the light emission surface, the brightness uniformity of the samples in which Ra was 0 µm, 0.3 µm, 1.3 µm, 1.8 µm, and 4.2 µm was 101%, 99%, 84%, 95%, and 92%, respectively.

In other words, in the comparative examples in which the transfer rate of the recesses 22 was 77%, the brightness uniformity did not improve even when the arithmetic mean roughness Ra of the second surface 43b was reduced.

Moreover, with respect to the examples and comparative examples in which the transfer rate of the recesses 22 was 94%, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 99%, 99%, 99%, 100%, and 100%, respectively, and when the first surface 43a was set as the light emission surface, the brightness of the samples in which Ra was 0 µm, 0.3 µm, 1.3 µm, 1.8 µm, and 4.2 µm was 74%, 88%, 87%, 98%, and 98%, respectively.

Further, with respect to the examples and comparative examples in which the transfer rate of the recesses 22 was 94%, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 85%, 94%, 103%, 99%, and 89%, respectively, and when the first surface 43a was set as the light emission surface, the brightness uniformity of the samples in which Ra was 0 µm, 0.3 µm, 1.3 µm, 1.8 µm, and 4.2 µm was 117%, 103%, 93%, 102%, and 80%, respectively.

In other words, in the examples in which the transfer rate of the recesses 22 was 94%, the brightness uniformity greatly improved when the first surface 43a was set as the light emission surface and the arithmetic mean roughness Ra of the second surface 43b was set at 0 µm.

Moreover, with respect to the examples and comparative examples in which the transfer rate of the recesses 22 was 100%, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 91%, 96%, 97%, 99%, and 99%, respectively, and when the first surface 43a was set as the light emission surface, the brightness of the samples in which Ra was 0 µm, 0.3 µm, 1.3 µm, 1.8 µm, and 4.2 µm was 61%, 81%, 85%, 96%, and 97%, respectively.

Further, with respect to the examples and comparative examples in which the transfer rate of the recesses 22 was 100%, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 78%, 108%, 97%, 102%, and 99%, respectively, and when the first surface 43a was set as the light emission surface, the brightness uniformity of the samples in which Ra was 0 µm, 0.3 µm, 1.3 µm, 1.8 µm, and 4.2 µm was 107%, 117%, 88%, 102%, and 79%, respectively.

In other words, in the examples in which the transfer rate of the recesses 22 was 100%, the brightness uniformity greatly improved when the first surface 43a was set as the light emission surface and the arithmetic mean roughness Ra of the second surface 43b was set at 0.3 µm.

The evaluation results obtained in relation to the brightness and brightness uniformity in the first test, described above, are summarized in Fig. 7. In Fig. 7, white circles, white triangles, white inverted triangles, and white squares denote results obtained when the first surface 43a was set as the light incidence surface (lower pyramids), while black circles, black triangles, black inverted triangles, and black squares denote results obtained when the first surface 43a was set as the light emission surface (upper pyramids). Further, numerical values on the graph denote the arithmetic mean roughness Ra (µm) of the second surface 43b. Furthermore, the + symbol denotes the evaluation results (brightness and brightness uniformity both 100%) of the sample in which the transfer rate of the recesses 22 was 87% and the arithmetic mean roughness Ra of the second surface 43b was 1.8 µm, which was used as an evaluation reference (Reference) for the lower pyramids, while the * symbol denotes the evaluation results of the sample in which the transfer rate of the recesses 22 was 87% and the arithmetic mean roughness Ra of the second surface 43b was 1.8 µm, which was used as an evaluation reference (Reference) for the upper pyramids. However, the evaluation reference for the upper pyramids was 6.4% lower in brightness and 39% higher in brightness uniformity than the evaluation reference for the lower pyramids, and therefore, in Fig. 7, the evaluation results for the upper pyramids have been converted to numerical values obtained when the evaluation reference for the lower pyramids is set as 100%.

As shown in Fig. 7, it was learned that with the configuration of the backlight unit 40 shown in Fig. 4, in which white light sources are used as the light sources 42 and the color conversion sheet 44 and the upper light-diffusing sheet 47 are not disposed, when the transfer rate of the recesses 22 of the light-diffusing sheet 43 is set at 87% or more and the arithmetic mean roughness Ra of the second surface 43b is set at 1.5 µm or less, preferably 1.0 µm or less, and more preferably close to 0 µm, the brightness uniformity can be improved. It was also learned that the overall brightness uniformity is better when the first surface 43a is set as the light emission surface (upper pyramids) than when the first surface 43a is set as the light incidence surface (lower pyramids).

### <Second Test>

In the second test, the brightness and brightness uniformity of the light-diffusing sheet 43 were evaluated using the configurations of the backlight unit 40 shown in Figs. 2 and 3, in which blue light sources are used as the light sources 42 and the color conversion sheet 44 and the upper light-diffusing sheet 47 are disposed. It should be noted that in the second test, blue LED elements arranged in squares at a pitch of 3.5 mm and a pitch of 4.5 mm were used as the plurality of light sources 42.

As a result, with respect to the examples and comparative examples in which the transfer rate of the recesses 22 was 87%, with the backlight unit configuration shown in Fig. 2, when the brightness of the sample in which the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, and 4.2 µm was 90%, 95%, 94%, and 99%, respectively, and when the first surface 43a was set as the light emission surface, the brightness of the samples in which Ra was 0 µm, 0.3 µm, 1.3 µm, and 4.2 µm was 94%, 97%, 96%, and 99%, respectively.

Meanwhile, with respect to the examples and comparative examples in which the transfer rate of the recesses 22 was 87%, with the backlight unit configuration shown in Fig. 3, when the brightness of the sample having the backlight unit configuration shown in Fig. 2, in which the arithmetic mean roughness Ra of the second surface 43b was 1.8 µm, was set as 100% and the first surface 43a was set as the light incidence surface, the brightness of the samples in which Ra was 0 µm, 0.3 µm, 1.3 µm, and 4.2 µm was 92%, 93%, 94%, and 99%, respectively, and when the first surface 43a was set as the light emission surface, the brightness of the samples in which Ra was 0 µm, 0.3 µm, 1.3 µm, and 4.2 µm was 90%, 93%, 94%, and 99%, respectively.

Further, with respect to the examples and comparative examples in which the transfer rate of the recesses 22 was 87%, with the backlight unit configuration shown in Fig. 2, when the brightness uniformity of the sample in which the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, and 4.2 µm was 110%, 108%, 105%, and 86%, respectively, and when the first surface 43a was set as the light emission surface, the brightness uniformity of the samples in which Ra was 0 µm, 0.3 µm, 1.3 µm, and 4.2 µm was 100%, 103%, 99%, and 89%, respectively.

Meanwhile, with respect to the examples and comparative examples in which the transfer rate of the recesses 22 was 87%, with the backlight unit configuration shown in Fig. 3, when the brightness uniformity of the sample having the backlight unit configuration shown in Fig. 2, in which the arithmetic mean roughness Ra of the second surface 43b was 1.8 µm, was set as 100% and the first surface 43a was set as the light incidence surface, the brightness uniformity of the samples in which Ra was 0 µm, 0.3 µm, 1.3 µm, and 4.2 µm was 95%, 101%, 98%, and 89%, respectively, and when the first surface 43a was set as the light emission surface, the brightness uniformity of the samples in which Ra was 0 µm, 0.3 µm, 1.3 µm, and 4.2 µm was 116%, 117%, 111%, and 82%, respectively.

In other words, in the examples in which the transfer rate of the recesses 22 was 87%, the brightness uniformity improved when the arithmetic mean roughness Ra of the second surface 43b approached 0 µm.

Further, with respect to the comparative examples in which the transfer rate of the recesses 22 was 77%, with the backlight unit configuration shown in Fig. 2, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 98%, 101%, 100%, 104%, and 104%, respectively, and when the first surface 43a was set as the light emission surface, the brightness of the samples in which Ra was 0 µm, 0.3 µm, 1.3 µm, 1.8 µm, and 4.2 µm was 100%, 101%, 101%, 102%, and 102%, respectively.

Meanwhile, with respect to the comparative examples in which the transfer rate of the recesses 22 was 77%, with the backlight unit configuration shown in Fig. 3, when the brightness of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness of the samples in which Ra was 0 µm, 0.3 µm, 1.3 µm, 1.8 µm, and 4.2 µm was 96%, 98%, 97%, 100%, and 100%, respectively, and when the first surface 43a was set as the light emission surface, the brightness of the samples in which Ra was 0 µm, 0.3 µm, 1.3 µm, 1.8 µm, and 4.2 µm was 95%, 98%, 97%, 100%, and 100%, respectively.

Further, with respect to the comparative examples in which the transfer rate of the recesses 22 was 77%, with the backlight unit configuration shown in Fig. 2, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 91%, 92%, 92%, 93%, and 93%, respectively, and when the first surface 43a was set as the light emission surface, the brightness uniformity of the samples in which Ra was 0 µm, 0.3 µm, 1.3 µm, 1.8 µm, and 4.2 µm was 89%, 89%, 89%, 94%, and 95%, respectively.

Meanwhile, with respect to the comparative examples in which the transfer rate of the recesses 22 was 77%, with the backlight unit configuration shown in Fig. 3, when the brightness uniformity of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness uniformity of the samples in which Ra was 0 µm, 0.3 µm, 1.3 µm, 1.8 µm, and 4.2 µm was 86%, 92%, 92%, 102%, and 105%, respectively, and when the first surface 43a was set as the light emission surface, the brightness uniformity of the samples in which Ra was 0 µm, 0.3 µm, 1.3 µm, 1.8 µm, and 4.2 µm was 106%, 105%, 106%, 103%, and 101%, respectively.

In other words, in the comparative examples in which the transfer rate of the recesses 22 was 77%, the brightness uniformity did not improve even when the arithmetic mean roughness Ra of the second surface 43b was reduced.

Moreover, with respect to the examples and comparative examples in which the transfer rate of the recesses 22 was 94%, with the backlight unit configuration shown in Fig. 2, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 84%, 91%, 90%, 97%, and 96%, respectively, and when the first surface 43a was set as the light emission surface, the brightness of the samples in which Ra was 0 µm, 0.3 µm, 1.3 µm, 1.8 µm, and 4.2 µm was 90%, 94%, 94%, 98%, and 98%, respectively.

Meanwhile, with respect to the examples and comparative examples in which the transfer rate of the recesses 22 was 94%, with the backlight unit configuration shown in Fig. 3, when the brightness of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness of the samples in which Ra was 0 µm, 0.3 µm, 1.3 µm, 1.8 µm, and 4.2 µm was 90%, 94%, 93%, 99%, and 98%, respectively, and when the first surface 43a was set as the light emission surface, the brightness of the samples in which Ra was 0 µm, 0.3 µm, 1.3 µm, 1.8 µm, and 4.2 µm was 87%, 94%, 94%, 99%, and 99%, respectively.

Furthermore, with respect to the examples and comparative examples in which the transfer rate of the recesses 22 was 94%, with the backlight unit configuration shown in Fig. 2, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 142%, 132%, 135%, 120%, and 103%, respectively, and when the first surface 43a was set as the light emission surface, the brightness uniformity of the samples in which Ra was 0 µm, 0.3 µm, 1.3 µm, 1.8 µm, and 4.2 µm was 125%, 119%, 121%, 116%, and 101%, respectively.

Meanwhile, with respect to the examples and comparative examples in which the transfer rate of the recesses 22 was 94%, with the backlight unit configuration shown in Fig. 3, when the brightness uniformity of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness uniformity of the samples in which Ra was 0 µm, 0.3 µm, 1.3 µm, 1.8 µm, and 4.2 µm was 108%, 112%, 114%, 114%, and 100%, respectively, and when the first surface 43a was set as the light emission surface, the brightness uniformity of the samples in which Ra was 0 µm, 0.3 µm, 1.3 µm, 1.8 µm, and 4.2 µm was 127%, 126%, 127%, 115%, and 93%, respectively.

In other words, in the examples in which the transfer rate of the recesses 22 was 94%, the brightness uniformity greatly improved when the arithmetic mean roughness Ra of the second surface 43b approached 0 µm.

Furthermore, with respect to the examples and comparative examples in which the transfer rate of the recesses 22 was 100%, with the backlight unit configuration shown in Fig. 2, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 76%, 84%, 86%, 94%, and 93%, respectively, and when the first surface 43a was set as the light emission surface, the brightness of the samples in which Ra was 0 µm, 0.3 µm, 1.3 µm, 1.8 µm, and 4.2 µm was 83%, 89%, 92%, 95%, and 96%, respectively.

Meanwhile, with respect to the examples and comparative examples in which the transfer rate of the recesses 22 was 100%, with the backlight unit configuration shown in Fig. 3, when the brightness of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness of the samples in which Ra was 0 µm, 0.3 µm, 1.3 µm, 1.8 µm, and 4.2 µm was 82%, 89%, 92%, 98%, and 97%, respectively, and when the first surface 43a was set as the light emission surface, the brightness of the samples in which Ra was 0 µm, 0.3 µm, 1.3 µm, 1.8 µm, and 4.2 µm was 80%, 90%, 92%, 97%, and 98%, respectively.

Moreover, with respect to the examples and comparative examples in which the transfer rate of the recesses 22 was 100%, with the backlight unit configuration shown in Fig. 2, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 161%, 152%, 150%, 125%, and 110%, respectively, and when the first surface 43a was set as the light emission surface, the brightness uniformity of the samples in which Ra was 0 µm, 0.3 µm, 1.3 µm, 1.8 µm, and 4.2 µm was 136%, 134%, 137%, 119%, and 108%, respectively.

Meanwhile, with respect to the examples and comparative examples in which the transfer rate of the recesses 22 was 100%, with the backlight unit configuration shown in Fig. 3, when the brightness uniformity of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness uniformity of the samples in which Ra was 0 µm, 0.3 µm, 1.3 µm, 1.8 µm, and 4.2 µm was 120%, 125%, 126%, 114%, and 103%, respectively, and when the first surface 43a was set as the light emission surface, the brightness uniformity of the samples in which Ra was 0 µm, 0.3 µm, 1.3 µm, 1.8 µm, and 4.2 µm was 126%, 132%, 129%, 107%, and 92%, respectively.

In other words, in the examples in which the transfer rate of the recesses 22 was 100%, the brightness uniformity greatly improved when the arithmetic mean roughness Ra of the second surface 43b approached 0 µm.

As regards the evaluation results obtained in relation to the brightness and brightness uniformity in the second test, described above, Fig. 8 shows the evaluation results obtained with the backlight unit configuration shown in Fig. 2 (the configuration in which the color conversion sheet 44 is disposed on the upper side of the light-diffusing sheet 43), and Fig. 9 shows the evaluation results obtained with the backlight unit configuration shown in Fig. 3 (the configuration in which the color conversion sheet 44 is disposed on the lower side of the light-diffusing sheet 43). In Figs. 8 and 9, white circles, white triangles, white inverted triangles, and white squares denote results obtained when the first surface 43a was set as the light incidence surface (lower pyramids), while black circles, black triangles, black inverted triangles, and black squares denote results obtained when the first surface 43a was set as the light emission surface (upper pyramids). Further, numerical values on the graph denote the arithmetic mean roughness Ra (µm) of the second surface 43b. Furthermore, the + symbol in Fig. 8 denotes the evaluation results (brightness and brightness uniformity both 100%) of the sample in which the transfer rate of the recesses 22 was 87% and the arithmetic mean roughness Ra of the second surface 43b was 1.8 µm, which was used as an evaluation reference (Reference) for the lower pyramids, while the * symbol in Fig. 8 denotes the evaluation results of the sample in which the transfer rate of the recesses 22 was 87% and the arithmetic mean roughness Ra of the second surface 43b was 1.8 µm, which was used as an evaluation reference (Reference) for the upper pyramids. However, the evaluation reference for the upper pyramids was around 5% higher in brightness and around 20% lower in brightness uniformity than the evaluation reference for the lower pyramids, and therefore, in Figs. 8 and 9, the evaluation results for the upper pyramids have been converted to numerical values obtained when the evaluation reference for the lower pyramids is set as 100%.

As shown in Figs. 8 and 9, it was learned that with the configurations of the backlight unit 40 shown in Figs. 2 and 3, in which blue light sources (blue LED elements arranged in squares at a pitch of 3.5 mm and a pitch of 4.5 mm) are used as the light sources 42 and the color conversion sheet 44 and the upper light-diffusing sheet 47 are disposed, when the transfer rate of the recesses 22 of the light-diffusing sheet 43 is set at 87% or more, preferably 90% or more, and more preferably close to 100% and the arithmetic mean roughness Ra of the second surface 43b is set at 1.5 µm or less, preferably 1.0 µm or less, and more preferably close to 0 µm, the brightness uniformity can be improved. It was also learned that the overall brightness uniformity is better with the backlight unit configuration shown in Fig. 2 (the configuration in which the color conversion sheet 44 is disposed on the upper side of the light-diffusing sheet 43) than with the backlight unit configuration shown in Fig. 3 (the configuration in which the color conversion sheet 44 is disposed on the lower side of the light-diffusing sheet 43). More specifically, as shown in Fig. 8, a pronounced brightness uniformity improvement effect was obtained when the first surface 43a was set as the light incidence surface (lower pyramids) with the backlight unit configuration shown in Fig. 2 (the configuration in which the color conversion sheet 44 is disposed on the upper side of the light-diffusing sheet 43).

### <Third Test>

In the third test, the brightness and brightness uniformity of the light-diffusing sheet 43 were evaluated using the configurations of the backlight unit 40 shown in Figs. 2 and 3, in which blue light sources are used as the light sources 42 and the color conversion sheet 44 and the upper light-diffusing sheet 47 are disposed. It should be noted that in the third test, blue LED elements arranged in squares at a pitch of 2.8 mm and a pitch of 2.8 mm were used as the plurality of light sources 42.

As a result, with respect to the examples and comparative examples in which the transfer rate of the recesses 22 was 87%, with the backlight unit configuration shown in Fig. 2, when the brightness of the sample in which the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, and 4.2 µm was 91%, 95%, 95%, and 100%, respectively, and when the first surface 43a was set as the light emission surface, the brightness of the samples in which Ra was 0 µm, 0.3 µm, 1.3 µm, and 4.2 µm was 94%, 97%, 97%, and 99%, respectively.

Meanwhile, with respect to the examples and comparative examples in which the transfer rate of the recesses 22 was 87%, with the backlight unit configuration shown in Fig. 3, when the brightness of the sample having the backlight unit configuration shown in Fig. 2, in which the arithmetic mean roughness Ra of the second surface 43b was 1.8 µm, was set as 100% and the first surface 43a was set as the light incidence surface, the brightness of the samples in which Ra was 0 µm, 0.3 µm, 1.3 µm, and 4.2 µm was 92%, 93%, 95%, and 99%, respectively, and when the first surface 43a was set as the light emission surface, the brightness of the samples in which Ra was 0 µm, 0.3 µm, 1.3 µm, and 4.2 µm was 90%, 93%, 94%, and 99%, respectively.

Further, with respect to the examples and comparative examples in which the transfer rate of the recesses 22 was 87%, with the backlight unit configuration shown in Fig. 2, when the brightness uniformity of the sample in which the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, and 4.2 µm was 96%, 94%, 97%, and 89%, respectively, and when the first surface 43a was set as the light emission surface, the brightness uniformity of the samples in which Ra was 0 µm, 0.3 µm, 1.3 µm, and 4.2 µm was 94%, 96%, 94%, and 87%, respectively.

Meanwhile, with respect to the examples and comparative examples in which the transfer rate of the recesses 22 was 87%, with the backlight unit configuration shown in Fig. 3, when the brightness uniformity of the sample having the backlight unit configuration shown in Fig. 2, in which the arithmetic mean roughness Ra of the second surface 43b was 1.8 µm, was set as 100% and the first surface 43a was set as the light incidence surface, the brightness uniformity of the samples in which Ra was 0 µm, 0.3 µm, 1.3 µm, and 4.2 µm was 80%, 87%, 87%, and 93%, respectively, and when the first surface 43a was set as the light emission surface, the brightness uniformity of the samples in which Ra was 0 µm, 0.3 µm, 1.3 µm, and 4.2 µm was 101%, 102%, 104%, and 81%, respectively.

In other words, in the examples in which the transfer rate of the recesses 22 was 87%, the effect of the arithmetic mean roughness Ra of the second surface 43b on the brightness uniformity was small.

Further, with respect to the comparative examples in which the transfer rate of the recesses 22 was 77%, with the backlight unit configuration shown in Fig. 2, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 98%, 101%, 100%, 104%, and 103%, respectively, and when the first surface 43a was set as the light emission surface, the brightness of the samples in which Ra was 0 µm, 0.3 µm, 1.3 µm, 1.8 µm, and 4.2 µm was 100%, 101%, 101%, 102%, and 102%, respectively.

Meanwhile, with respect to the comparative examples in which the transfer rate of the recesses 22 was 77%, with the backlight unit configuration shown in Fig. 3, when the brightness of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness of the samples in which Ra was 0 µm, 0.3 µm, 1.3 µm, 1.8 µm, and 4.2 µm was 96%, 98%, 97%, 101%, and 101%, respectively, and when the first surface 43a was set as the light emission surface, the brightness of the samples in which Ra was 0 µm, 0.3 µm, 1.3 µm, 1.8 µm, and 4.2 µm was 94%, 98%, 97%, 101%, and 100%, respectively.

Further, with respect to the comparative examples in which the transfer rate of the recesses 22 was 77%, with the backlight unit configuration shown in Fig. 2, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 80%, 79%, 79%, 87%, and 90%, respectively, and when the first surface 43a was set as the light emission surface, the brightness uniformity of the samples in which Ra was 0 µm, 0.3 µm, 1.3 µm, 1.8 µm, and 4.2 µm was 79%, 80%, 80%, 89%, and 90%, respectively.

Meanwhile, with respect to the comparative examples in which the transfer rate of the recesses 22 was 77%, with the backlight unit configuration shown in Fig. 3, when the brightness uniformity of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness uniformity of the samples in which Ra was 0 µm, 0.3 µm, 1.3 µm, 1.8 µm, and 4.2 µm was 74%, 79%, 78%, 97%, and 104%, respectively, and when the first surface 43a was set as the light emission surface, the brightness uniformity of the samples in which Ra was 0 µm, 0.3 µm, 1.3 µm, 1.8 µm, and 4.2 µm was 96%, 93%, 94%, 97%, and 100%, respectively.

In other words, in the comparative examples in which the transfer rate of the recesses 22 was 77%, the brightness uniformity did not improve even when the arithmetic mean roughness Ra of the second surface 43b was reduced.

Moreover, with respect to the examples and comparative examples in which the transfer rate of the recesses 22 was 94%, with the backlight unit configuration shown in Fig. 2, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 84%, 91%, 90%, 96%, and 97%, respectively, and when the first surface 43a was set as the light emission surface, the brightness of the samples in which Ra was 0 µm, 0.3 µm, 1.3 µm, 1.8 µm, and 4.2 µm was 90%, 95%, 94%, 98%, and 98%, respectively.

Meanwhile, with respect to the examples and comparative examples in which the transfer rate of the recesses 22 was 94%, with the backlight unit configuration shown in Fig. 3, when the brightness of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness of the samples in which Ra was 0 µm, 0.3 µm, 1.3 µm, 1.8 µm, and 4.2 µm was 90%, 94%, 94%, 99%, and 100%, respectively, and when the first surface 43a was set as the light emission surface, the brightness of the samples in which Ra was 0 µm, 0.3 µm, 1.3 µm, 1.8 µm, and 4.2 µm was 87%, 94%, 93%, 99%, and 100%, respectively.

Furthermore, with respect to the examples and comparative examples in which the transfer rate of the recesses 22 was 94%, with the backlight unit configuration shown in Fig. 2, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 129%, 126%, 129%, 130%, and 117%, respectively, and when the first surface 43a was set as the light emission surface, the brightness uniformity of the samples in which Ra was 0 µm, 0.3 µm, 1.3 µm, 1.8 µm, and 4.2 µm was 119%, 121%, 122%, 125%, and 109%, respectively.

Meanwhile, with respect to the examples and comparative examples in which the transfer rate of the recesses 22 was 94%, with the backlight unit configuration shown in Fig. 3, when the brightness uniformity of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness uniformity of the samples in which Ra was 0 µm, 0.3 µm, 1.3 µm, 1.8 µm, and 4.2 µm was 92%, 105%, 105%, 117%, and 107%, respectively, and when the first surface 43a was set as the light emission surface, the brightness uniformity of the samples in which Ra was 0 µm, 0.3 µm, 1.3 µm, 1.8 µm, and 4.2 µm was 121%, 126%, 122%, 126%, and 103%, respectively.

In other words, in the examples in which the transfer rate of the recesses 22 was 94%, an overall improvement in the brightness uniformity was obtained irrespective of the arithmetic mean roughness Ra of the second surface 43b.

Furthermore, with respect to the examples and comparative examples in which the transfer rate of the recesses 22 was 100%, with the backlight unit configuration shown in Fig. 2, when the brightness of the sample in which the transfer rate of the recesses 22 was 87% and the arithmetic mean roughness Ra of the second surface 43b was 1.8 µm was set as 100% and the first surface 43a was set as the light incidence surface, the brightness of the samples in which Ra was 0 µm, 0.3 µm, 1.3 µm, 1.8 µm, and 4.2 µm was 77%, 85%, 86%, 94%, and 95%, respectively, and when the first surface 43a was set as the light emission surface, the brightness of the samples in which Ra was 0 µm, 0.3 µm, 1.3 µm, 1.8 µm, and 4.2 µm was 84%, 89%, 92%, 96%, and 96%, respectively.

Meanwhile, with respect to the examples and comparative examples in which the transfer rate of the recesses 22 was 100%, with the backlight unit configuration shown in Fig. 3, when the brightness of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness of the samples in which Ra was 0 µm, 0.3 µm, 1.3 µm, 1.8 µm, and 4.2 µm was 82%, 90%, 92%, 98%, and 98%, respectively, and when the first surface 43a was set as the light emission surface, the brightness of the samples in which Ra was 0 µm, 0.3 µm, 1.3 µm, 1.8 µm, and 4.2 µm was 80%, 90%, 92%, 98%, and 98%, respectively.

Moreover, with respect to the examples and comparative examples in which the transfer rate of the recesses 22 was 100%, with the backlight unit configuration shown in Fig. 2, when the brightness uniformity of the sample in which the transfer rate of the recesses 22 was 87% and the arithmetic mean roughness Ra of the second surface 43b was 1.8 µm was set as 100% and the first surface 43a was set as the light incidence surface, the brightness uniformity of the samples in which Ra was 0 µm, 0.3 µm, 1.3 µm, 1.8 µm, and 4.2 µm was 147%, 153%, 151%, 143%, and 135%, respectively, and when the first surface 43a was set as the light emission surface, the brightness uniformity of the samples in which Ra was 0 µm, 0.3 µm, 1.3 µm, 1.8 µm, and 4.2 µm was 135%, 147%, 146%, 140%, and 127%, respectively.

Meanwhile, with respect to the examples and comparative examples in which the transfer rate of the recesses 22 was 100%, with the backlight unit configuration shown in Fig. 3, when the brightness uniformity of the sample having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness uniformity of the samples in which Ra was 0 µm, 0.3 µm, 1.3 µm, 1.8 µm, and 4.2 µm was 109%, 122%, 120%, 124%, and 119%, respectively, and when the first surface 43a was set as the light emission surface, the brightness uniformity of the samples in which Ra was 0 µm, 0.3 µm, 1.3 µm, 1.8 µm, and 4.2 µm was 108%, 128%, 127%, 118%, and 105%, respectively.

In other words, in the examples in which the transfer rate of the recesses 22 was 100%, an overall improvement in the brightness uniformity was obtained irrespective of the arithmetic mean roughness Ra of the second surface 43b.

As regards the evaluation results obtained in relation to the brightness and brightness uniformity in the third test, described above, Fig. 10 shows the evaluation results obtained with the backlight unit configuration shown in Fig. 2 (the configuration in which the color conversion sheet 44 is disposed on the upper side of the light-diffusing sheet 43), and Fig. 11 shows the evaluation results obtained with the backlight unit configuration shown in Fig. 3 (the configuration in which the color conversion sheet 44 is disposed on the lower side of the light-diffusing sheet 43). In Figs. 10 and 11, white circles, white triangles, white inverted triangles, and white squares denote results obtained when the first surface 43a was set as the light incidence surface (lower pyramids), while black circles, black triangles, black inverted triangles, and black squares denote results obtained when the first surface 43a was set as the light emission surface (upper pyramids). Further, numerical values on the graph denote the arithmetic mean roughness Ra (µm) of the second surface 43b. Furthermore, the + symbol in Fig. 10 denotes the evaluation results (brightness and brightness uniformity both 100%) of the sample in which the transfer rate of the recesses 22 was 87% and the arithmetic mean roughness Ra of the second surface 43b was 1.8 µm, which was used as an evaluation reference (Reference) for the lower pyramids, while the * symbol in Fig. 10 denotes the evaluation results of the sample in which the transfer rate of the recesses 22 was 87% and the arithmetic mean roughness Ra of the second surface 43b was 1.8 µm, which was used as an evaluation reference (Reference) for the upper pyramids. However, the evaluation reference for the upper pyramids was around 5% higher in brightness and around 20% lower in brightness uniformity than the evaluation reference for the lower pyramids, and therefore, in Figs. 10 and 11, the evaluation results for the upper pyramids have been converted to numerical values obtained when the evaluation reference for the lower pyramids is set as 100%.

As shown in Figs. 10 and 11, it was learned that with the configurations of the backlight unit 40 shown in Figs. 2 and 3, in which blue light sources (blue LED elements arranged in squares at a pitch of 2.8 mm and a pitch of 2.8 m) are used as the light sources 42 and the color conversion sheet 44 and the upper light-diffusing sheet 47 are disposed, when the transfer rate of the recesses 22 of the light-diffusing sheet 43 is set at 87% or more, preferably 90% or more, and more preferably close to 100% and the arithmetic mean roughness Ra of the second surface 43b is set at 1.5 µm or less, and preferably around 1.0 µm, the brightness uniformity can be improved. It was also learned that the overall brightness uniformity is better with the backlight unit configuration shown in Fig. 2 (the configuration in which the color conversion sheet 44 is disposed on the upper side of the light-diffusing sheet 43) than with the backlight unit configuration shown in Fig. 3 (the configuration in which the color conversion sheet 44 is disposed on the lower side of the light-diffusing sheet 43).

### <Effect of Light Sources in First to Third Tests>

With the light sources 42 used in the first test, few light components are emitted in a directly upward direction from the light sources 42, while many light components are emitted in a diagonally upward direction. With the light sources 42 used in the second test, somewhat more light components are emitted in a directly upward direction from the light sources 42, while somewhat fewer light components are emitted in a diagonally upward direction. With the light sources 42 used in the third test, many light components are emitted in a directly upward direction from the light sources 42, while few light components are emitted in a diagonally upward direction.

When the light sources 42 with which the number of light components (referred to hereinafter as directly upward light) emitted in a directly upward direction is greater than the number of light components (referred to hereinafter as diagonal light) emitted in a diagonally upward direction are used and the transfer rate of the recesses 22 is low, the directly upward light is more likely to pass as is through the light-diffusing sheet 43, and it is therefore thought that the arithmetic mean roughness Ra of the second surface 43b should be increased to a certain extent in order to increase the light diffusing property of the second surface 43b. Further, when the light sources 42 that emit more directly upward light than diagonal light are used and the transfer rate of the recesses 22 is increased, it is thought that the arithmetic mean roughness Ra of the second surface 43b should be reduced so as not to impede total reflection by the recesses 22, which promotes brightness uniformity. It should be noted that in the third test, in which the light sources 42 that emit more directly upward light than diagonal light were used, it was possible to improve both the brightness and the brightness uniformity in certain cases by setting the arithmetic mean roughness Ra of the second surface 43b on the large side.

Meanwhile, when the light sources 42 that emit less directly upward light than diagonal light are used, the degree to which the brightness uniformity increases relative to increases in the transfer rate of the recesses 22 decreases, and it is therefore thought that the arithmetic mean roughness Ra of the second surface 43b should be reduced so as to prevent an increase in diagonal light components. It should be noted that directly upward light is less likely to be affected by the thickness of the base material layer 21, whereas diagonal light is more likely to be affected by the thickness of the base material layer 21, and it is therefore believed that variation in the thickness of the base material layer 21 produces a similar action with respect to diagonal light to variation in the arithmetic mean roughness Ra of the second surface 43b.

From the above description, it is thought that in order to improve the brightness uniformity with the backlight unit 40 using the light sources 42 that emit more directly upward light than diagonal light, (1) the transfer rate of the recesses 22 should be brought as close as possible to 100%, (2) the arithmetic mean roughness Ra of the second surface 43b should be steadily reduced as the transfer rate of the recesses 22 approaches 100%, and (3) when there are limitations on the transfer rate of the recesses 22 and the number of arranged light-diffusing sheets 43, the arithmetic mean roughness Ra of the second surface 43b and the thickness of the base material layer 21 should both be increased.

Further, in order to improve the brightness uniformity with the backlight unit 40 using the light sources 42 that emit less directly upward light than diagonal light, it is thought that (1) the transfer rate of the recesses 22 should be set at 87% or more, and (2) the arithmetic mean roughness Ra of the second surface 43b should be set as small as possible.

Furthermore, in order to improve the brightness uniformity with the backlight unit 40 using the light sources 42 that emit both directly upward light and diagonal light, it is thought that (1) the transfer rate of the recesses 22 should be set close to 100%, and (2) the arithmetic mean roughness Ra of the second surface 43b should be set at 1.5 µm or less.

### <Fourth Test>

The fourth test differs from the second and third tests in that the thickness of the base material layer 21 of the light-diffusing sheet 43 was reduced to 90 µm. In the fourth test, as the light-diffusing sheets 43 of the example, a sample in which the transfer rate of the recesses 22 was 87% and the arithmetic mean roughness Ra of the second surface 43b was 0 µm and a sample in which the transfer rate of the recesses 22 was 100% and the arithmetic mean roughness Ra of the second surface 43b was 0 µm were prepared. Further, as the light-diffusing sheets 43 of the comparative example, a sample in which the transfer rate of the recesses 22 was 87% and the arithmetic mean roughness Ra of the second surface 43b was 1.8 µm and a sample in which the transfer rate of the recesses 22 was 100% and the arithmetic mean roughness Ra of the second surface 43b was 1.8 µm were prepared.

In the fourth test, first, the brightness and brightness uniformity of the light-diffusing sheet 43 were evaluated using the configurations of the backlight unit 40 shown in Figs. 2 and 3, in which the same blue light sources as those of the second test were used as the light sources 42, and the color conversion sheet 44 and the upper light-diffusing sheet 47 were disposed.

As a result, in a case where the transfer rate of the recesses 22 was 87%, with the backlight unit configuration shown in Fig. 2, when the brightness of the comparative example, in which the arithmetic mean roughness Ra of the second surface 43b was 1.8 µm, was set as 100% and the first surface 43a was set as the light incidence surface, the brightness of the example, in which Ra was 0 µm, was 93%, and when the first surface 43a was set as the light emission surface, the brightness of the example, in which Ra was 0 µm, was 96%. Meanwhile, with the backlight unit configuration shown in Fig. 3, when the brightness of the comparative example having the backlight unit configuration shown in Fig. 2, in which the arithmetic mean roughness Ra of the second surface 43b was 1.8 µm, was set as 100% and the first surface 43a was set as the light incidence surface, the brightness of the example, in which Ra was 0 µm, was 94%, and when the first surface 43a was set as the light emission surface, the brightness of the example, in which Ra was 0 µm, was 92%.

Further, in a case where the transfer rate of the recesses 22 was 87%, with the backlight unit configuration shown in Fig. 2, when the brightness uniformity of the comparative example, in which the arithmetic mean roughness Ra of the second surface 43b was 1.8 µm, was set as 100% and the first surface 43a was set as the light incidence surface, the brightness uniformity of the example, in which Ra was 0 µm, was 111%, and when the first surface 43a was set as the light emission surface, the brightness uniformity of the example, in which Ra was 0 µm, was 104%. Meanwhile, with the backlight unit configuration shown in Fig. 3, when the brightness uniformity of the comparative example having the backlight unit configuration shown in Fig. 2, in which the arithmetic mean roughness Ra of the second surface 43b was 1.8 µm, was set as 100% and the first surface 43a was set as the light incidence surface, the brightness uniformity of the example, in which Ra was 0 µm, was 98%, and when the first surface 43a was set as the light emission surface, the brightness uniformity of the example, in which Ra was 0 µm, was 115%.

Furthermore, in a case where the transfer rate of the recesses 22 was 100%, with the backlight unit configuration shown in Fig. 2, when the brightness of the comparative example, in which the transfer rate of the recesses 22 was 87% and the arithmetic mean roughness Ra of the second surface 43b was 1.8 µm, was set as 100% and the first surface 43a was set as the light incidence surface, the brightness of the example, in which Ra was 0 µm, was 81% and the brightness of the comparative example, in which Ra was 1.8 µm, was 96%, and when the first surface 43a was set as the light emission surface, the brightness of the example, in which Ra was 0 µm, was 86% and the brightness of the comparative example, in which Ra was 1.8 µm, was 96%. Meanwhile, with the backlight unit configuration shown in Fig. 3, when the brightness of the comparative example having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness of the example, in which Ra was 0 µm, was 89% and the brightness of the comparative example, in which Ra was 1.8 µm, was 101%, and when the first surface 43a was set as the light emission surface, the brightness of the example, in which Ra was 0 µm, was 88% and the brightness of the comparative example, in which Ra was 1.8 µm, was 102%.

Moreover, in a case where the transfer rate of the recesses 22 was 100%, with the backlight unit configuration shown in Fig. 2, when the brightness uniformity of the comparative example, in which the transfer rate of the recesses 22 was 87% and the arithmetic mean roughness Ra of the second surface 43b was 1.8 µm, was set as 100% and the first surface 43a was set as the light incidence surface, the brightness uniformity of the example, in which Ra was 0 µm, was 158% and the brightness uniformity of the comparative example, in which Ra was 1.8 µm, was 122%, and when the first surface 43a was set as the light emission surface, the brightness uniformity of the example, in which Ra was 0 µm, was 137% and the brightness uniformity of the comparative example, in which Ra was 1.8 µm, was 118%. Meanwhile, with the backlight unit configuration shown in Fig. 3, when the brightness uniformity of the comparative example having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness uniformity of the example, in which Ra was 0 µm, was 130% and the brightness uniformity of the comparative example, in which Ra was 1.8 µm, was 114%, and when the first surface 43a was set as the light emission surface, the brightness uniformity of the example, in which Ra was 0 µm, was 139% and the brightness uniformity of the comparative example, in which Ra was 1.8 µm, was 112%.

Next, in the fourth test, the brightness and brightness uniformity of the light-diffusing sheet 43 were evaluated using the configurations of the backlight unit 40 shown in Figs. 2 and 3, in which the same blue light sources as those of the third test were used as the light sources 42, and the color conversion sheet 44 and the upper light-diffusing sheet 47 were disposed.

As a result, in a case where the transfer rate of the recesses 22 was 87%, with the backlight unit configuration shown in Fig. 2, when the brightness of the comparative example, in which the arithmetic mean roughness Ra of the second surface 43b was 1.8 µm, was set as 100% and the first surface 43a was set as the light incidence surface, the brightness of the example, in which Ra was 0 µm, was 93%, and when the first surface 43a was set as the light emission surface, the brightness of the example, in which Ra was 0 µm, was 96%. Meanwhile, with the backlight unit configuration shown in Fig. 3, when the brightness of the comparative example having the backlight unit configuration shown in Fig. 2, in which the arithmetic mean roughness Ra of the second surface 43b was 1.8 µm, was set as 100% and the first surface 43a was set as the light incidence surface, the brightness of the example, in which Ra was 0 µm, was 94%, and when the first surface 43a was set as the light emission surface, the brightness of the example, in which Ra was 0 µm, was 92%.

Further, in a case where the transfer rate of the recesses 22 was 87%, with the backlight unit configuration shown in Fig. 2, when the brightness uniformity of the comparative example, in which the arithmetic mean roughness Ra of the second surface 43b was 1.8 µm, was set as 100% and the first surface 43a was set as the light incidence surface, the brightness uniformity of the example, in which Ra was 0 µm, was 97%, and when the first surface 43a was set as the light emission surface, the brightness uniformity of the example, in which Ra was 0 µm, was 93%. Meanwhile, with the backlight unit configuration shown in Fig. 3, when the brightness uniformity of the comparative example having the backlight unit configuration shown in Fig. 2, in which the arithmetic mean roughness Ra of the second surface 43b was 1.8 µm, was set as 100% and the first surface 43a was set as the light incidence surface, the brightness uniformity of the example, in which Ra was 0 µm, was 87%, and when the first surface 43a was set as the light emission surface, the brightness uniformity of the example, in which Ra was 0 µm, was 103%.

Furthermore, in a case where the transfer rate of the recesses 22 was 100%, with the backlight unit configuration shown in Fig. 2, when the brightness of the comparative example, in which the transfer rate of the recesses 22 was 87% and the arithmetic mean roughness Ra of the second surface 43b was 1.8 µm, was set as 100% and the first surface 43a was set as the light incidence surface, the brightness of the example, in which Ra was 0 µm, was 81% and the brightness of the comparative example, in which Ra was 1.8 µm, was 96%, and when the first surface 43a was set as the light emission surface, the brightness of the example, in which Ra was 0 µm, was 87% and the brightness of the comparative example, in which Ra was 1.8 µm, was 97%. Meanwhile, with the backlight unit configuration shown in Fig. 3, when the brightness of the comparative example having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness of the example, in which Ra was 0 µm, was 88% and the brightness of the comparative example, in which Ra was 1.8 µm, was 100%, and when the first surface 43a was set as the light emission surface, the brightness of the example, in which Ra was 0 µm, was 87% and the brightness of the comparative example, in which Ra was 1.8 µm, was 101%.

Moreover, in a case where the transfer rate of the recesses 22 was 100%, with the backlight unit configuration shown in Fig. 2, when the brightness uniformity of the comparative example, in which the transfer rate of the recesses 22 was 87% and the arithmetic mean roughness Ra of the second surface 43b was 1.8 µm, was set as 100% and the first surface 43a was set as the light incidence surface, the brightness uniformity of the example, in which Ra was 0 µm, was 152% and the brightness uniformity of the comparative example, in which Ra was 1.8 µm, was 142%, and when the first surface 43a was set as the light emission surface, the brightness uniformity of the example, in which Ra was 0 µm, was 138% and the brightness uniformity of the comparative example, in which Ra was 1.8 µm, was 133%. Meanwhile, with the backlight unit configuration shown in Fig. 3, when the brightness uniformity of the comparative example having the backlight unit configuration shown in Fig. 2, in which the transfer rate of the recesses 22 was 87% and the arithmetic mean roughness Ra of the second surface 43b was 1.8 µm, was set as 100% and the first surface 43a was set as the light incidence surface, the brightness uniformity of the example, in which Ra was 0 µm, was 117% and the brightness uniformity of the comparative example, in which Ra was 1.8 µm, was 124%, and when the first surface 43a was set as the light emission surface, the brightness uniformity of the example, in which Ra was 0 µm, was 134% and the brightness uniformity of the comparative example, in which Ra was 1.8 µm, was 117%.

As described above, in the fourth test, in which the thickness of the base material layer 21 of the light-diffusing sheet 43 is reduced in comparison with the second and third tests, similar evaluation results to those of the second test were obtained when the same light sources 42 as those of the second test were used, and similar evaluation results to those of the third test were obtained when the same light sources 42 as those of the third test were used.

### (Other Embodiments)

While an embodiment (including examples; the same applies hereinafter) of the present disclosure was described above, the present disclosure is not solely limited to the embodiment described above, and various modifications can be made within the scope of the disclosure. In other words, the foregoing description of the embodiment is illustrative in nature and is not intended to limit the present disclosure, its applications, or its uses.

### Reference Signs List

- 1: TFT substrate
- 2: CF substrate
- 3: Liquid crystal layer
- 5: Liquid crystal display panel
- 6: First polarizing plate
- 7: Second polarizing plate
- 21: Base material layer
- 22: Recess
- 22a: Center (vertex)
- 22b: Wall surface (inclined surface)
- 23: Ridgeline
- 40: Backlight unit
- 41: Reflecting sheet
- 42: Light source
- 43: Light-diffusing sheet
- 43a: First surface
- 43b: Second surface
- 44: Color conversion sheet
- 45: First prism sheet
- 46: Second prism sheet
- 47: Upper light-diffusing sheet
- 50: Liquid crystal display device
- 50a: Display screen

## Claims

1. A light-diffusing sheet having a first surface that serves as one of a light emission surface and a light incidence surface, and a second surface that serves as the other of the light emission surface and the light incidence surface, wherein
a plurality of inverted substantially square pyramidal recesses are provided in the first surface,
the arithmetic mean roughness of the second surface is 1.5 µm or less, and
the transfer rate of the plurality of recesses is 87% or more.

2. The light-diffusing sheet according to claim 1, wherein
the transfer rate is 90% or more.

3. The light-diffusing sheet according to claim 1, wherein
the arithmetic mean roughness is 1.0 µm or less.

4. A backlight unit that is built into a liquid crystal display device in order to guide light emitted from a plurality of light sources to a display screen,
the backlight unit comprising the light-diffusing sheet according to claim 1, which is provided between the display screen and the plurality of light sources.

5. The backlight unit according to claim 4, wherein
the light-diffusing sheet is stacked in a plurality of layers and arranged between the display screen and the plurality of light sources.

6. The backlight unit according to claim 5, wherein
the plurality of light sources are white light sources, and
the arithmetic mean roughness is 1.0 µm or less.

7. The backlight unit according to claim 5, wherein
the plurality of light sources are blue light sources,
the backlight unit further comprises a color conversion sheet that converts the wavelength of the light, and
the transfer rate is 90% or more.

8. The backlight unit according to claim 7, wherein
the color conversion sheet is arranged between the display screen and the plurality of stacked layers of the light-diffusing sheet.

9. The backlight unit according to claim 8, wherein,
in the plurality of stacked layers of the light-diffusing sheet, the first surface is a light incidence surface.

10. A liquid crystal display device comprising:
the backlight unit according to any one of claims 4 to 9; and
a liquid crystal display panel.

11. An information apparatus comprising the liquid crystal display device according to claim 10.
